# FASCICULE DE BREVET EUROPEEN

(11) **EP 4 010 388 B1**
(45) Date de publication et mention de la délivrance du brevet: **03.09.2025**
(21) Numéro de dépôt: 20756926.0
(22) Date de dépôt: 27.07.2020
(51) Int. Cl.: C08F 297/06, C08F 210/02, C08F 297/08

(54) **POLYMÈRE BLOC DIÉNIQUE RICHE EN ÉTHYLÈNE AYANT UN BLOC STATISTIQUE ET UN BLOC POLYÉTHYLÈNE**
ETHYLENREICHES DIENBLOCKPOLYMER MIT EINEM STATISTISCHEN BLOCK UND EINEM POLYETHYLENBLOCK
ETHYLENE-RICH DIENE BLOCK POLYMER HAVING A RANDOM BLOCK AND A POLYETHYLENE BLOCK

(30) Priorité: 07.08.2019 FR 1909032
(43) Date de publication de la demande: 15.06.2022
(73) Titulaire: Compagnie Générale des Etablissements Michelin, 63000 Clermont-Ferrand (FR); Centre National de la Recherche Scientifique, 75794 Paris Cedex 16 (FR); Ecole Supérieure de Chimie Physique Electronique de Lyon, 69616 Villeurbanne Cedex (FR); Université Claude Bernard Lyon I, 69625 Villeurbanne Cedex (FR)
(72) Inventeur: MORESO, Emma, 63040 Clermont-Ferrand Cedex 9 (FR); THUILLIEZ, Julien, 63040 Clermont-Ferrand Cedex 9 (FR); JEAN-BAPTISTE-DIT-DOMINIQUE, François, 63040 Clermont-Ferrand Cedex 9 (FR); BOISSON, Christophe, 01390 Tramoyes (FR); D'AGOSTO, Franck, 69740 Genas (FR); BAULU, Nicolas, 69740 Genas (FR); MONTARNAL, Damien, 38300 Ruy Montceau (FR)
(74) Mandataire: M.F.P. Michelin
(86) Numéro de dépôt international: PCT/FR2020/051381
(87) Numéro de publication internationale: WO 2021/023924

(56) Documents cités:
- EP-A1- 2 599 809
- WO-A1-2017/093654
- WO-A1-2019/077234

## Description

Le domaine de la présente invention est celui des copolymères diéniques riches en unités éthylène.

Il a été montré que des copolymères statistiques à base d'éthylène et de 1,3-diène et riches en unités éthylène présentent des propriétés intéressantes de rigidité, d'hystérèse, d'usure et d'adhésion. On peut par exemple se référer aux demandes de brevet WO 2014114607 A1, WO 2016012259 A1 et WO 2016087248 A1.

Un autre avantage de ces copolymères est l'utilisation d'éthylène qui est un monomère courant et disponible sur le marché, et accessible par voie fossile ou biologique. Un autre avantage de ces copolymères est la présence d'unités éthylène le long du squelette de polymères, unités largement moins sensibles que les unités diéniques aux mécanismes de dégradation oxydantes ou thermo-oxydantes, ce qui confère aux matériaux une meilleure stabilité et durée de vie.

La maîtrise de la rhéologie d'un polymère est un paramètre clef dans l'industrialisation et l'utilisation d'un polymère. La fabrication d'articles tout ou partie constitués d'un polymère fait généralement appel à différentes opérations telles que le malaxage, l'extrusion, le moulage, etc ..., opérations au cours desquelles le polymère est soumis à une large gamme de sollicitations en fréquence. La rhéologie du polymère doit se prêter à ces différentes opérations pour satisfaire les critères de qualité de l'article à fabriquer et les critères de productivité dans la chaîne de fabrication de l'article. En particulier, une viscosité élevée aux déformations à basse fréquence est souhaitable pour limiter les phénomènes d'écoulement du polymère. Des solutions pour augmenter la viscosité aux bas taux de cisaillement sans incidence sur la viscosité à plus haut taux de cisaillement sont par exemple décrites dans le document WO 99/10421 A1. Elles consistent à réticuler le polymère par réaction radicalaire ou à le modifier avec un agent de couplage polyfonctionnel capable de s'insérer dans des liaisons C-H. Le greffage de fonction associative sur un polymère est aussi une solution décrite dans la demande de brevet WO 2008099125 A1 pour améliorer les propriétés rhéologiques d'un polymère.

La Demanderesse a découvert qu'il était possible d'améliorer les propriétés rhéologiques des copolymères statistiques à base d'éthylène et de 1,3-diène et riches en unités éthylène sans modifier leurs propriétés mécaniques et dynamiques ou thermiques.

Ainsi un premier objet de l'invention est un polymère dibloc composé d'un premier bloc et d'un second bloc, le premier bloc étant un copolymère statistique comprenant des unités d'un 1,3-diène et plus de 50% en mole d'unités éthylène, le second bloc étant un polyéthylène de température de fusion supérieure à 90°C et de masse molaire moyenne en nombre supérieure ou égale à 2 000 g/mol et inférieure ou égale à 10 000 g/mol.

Un autre objet de l'invention est une composition qui comprend un polymère dibloc conforme à l'invention et un autre composant.

L'invention concerne aussi un procédé de préparation d'un polymère dibloc conforme à l'invention qui comprend la copolymérisation statistique d'un mélange monomère contenant de l'éthylène et un 1,3-diène, puis la polymérisation subséquente d'éthylène.

### Description :

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties en poids d'élastomère (du total des élastomères si plusieurs élastomères sont présents).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un copolymère sont exprimés en pourcentage molaire par rapport à la totalité des unités qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Le polymère conforme à l'invention est un dibloc. Un des deux blocs qui constitue le polymère dibloc et qui est désigné par le premier bloc est un copolymère statistique qui contient des unités éthylène et des unités d'un 1,3-diène. Le second bloc est un polyéthylène.

De manière connue, on entend par unité éthylène une unité qui a pour motif -(CH₂-CH₂)-. Les unités éthylène présentes dans le premier bloc représentent plus de 50% en moles des unités qui constituent le premier bloc. Selon l'un quelconque des modes de réalisation de l'invention, le premier bloc est de préférence un copolymère statistique d'éthylène et d'un 1,3-diène, auquel cas les unités monomères du premier bloc sont celles résultant de la copolymérisation de l'éthylène et du 1,3-diène et sont réparties de façon statistique dans le premier bloc.

Selon l'invention, le 1,3-diène utile aux besoins de l'invention est un seul composé, c'est-à-dire un seul (en anglais « one ») 1,3-diène ou est un mélange de 1,3-diènes qui se différencient les uns des autres par la structure chimique. Le 1,3-diène est de préférence le 1,3-butadiène ou l'isoprène, de manière plus préférentielle le 1,3-butadiène. De manière très préférentielle, le premier bloc est un copolymère statistique d'éthylène et de 1,3-butadiène.

De manière connue, un 1,3-diène peut s'insérer dans une chaîne polymère en croissance par une insertion 1,4 ou 1,2 ou encore 3,4 dans le cas de diène substitué comme l'isoprène pour donner lieu respectivement à la formation d'unité du 1,3-diène de configuration 1,4, d'unité du 1,3-diène de configuration 1,2 ou de configuration 3,4. De préférence, les unités du 1,3-diène sous la configuration 1,2 et les unités du 1,3-diène sous la configuration 3,4 représentent plus de 50% en mole des unités du 1,3-diène.

Selon un mode de réalisation de l'invention, le premier bloc contient des unités du 1,3-diène de configuration 1,4, de préférence 1,4-trans. De préférence, les unités du 1,3-diène de configuration 1,4-trans représentent plus de 50% en mole des unités du 1,3-diène de configuration 1,4. De manière plus préférentielle, les unités du 1,3-diène de configuration 1,4-trans représentent 100% en mole des unités du 1,3-diène de configuration 1,4.

Selon un mode de réalisation particulièrement préférentiel de l'invention, le premier bloc contient des unités du 1,3-diène qui sont à plus de 50% en mole des unités de configuration 1,2 ou 3,4, le complément à 100% des unités du 1,3-diène étant des unités de configuration 1,4-trans.

Selon un autre mode de réalisation particulièrement préférentiel de l'invention, en particulier lorsque le 1,3-diène est le 1,3-butadiène ou un mélange de 1,3-diènes dont un est le 1,3-butadiène, le premier bloc contient en outre des unités 1,2-cyclohexanediyle ou des unités 1,4-cyclohexanediyle, de préférence des unités 1,2-cyclohexanediyle. La présence de ces structures cycliques dans le premier bloc résulte d'une insertion très particulière de l'éthylène et de 1,3-butadiène lors de leur copolymérisation. La teneur en unités 1,2-cyclohexanediyle et en unités 1,4-cyclohexanediyle dans le premier bloc varie selon les teneurs respectives en éthylène et en 1,3-butadiène dans le premier bloc. Le premier bloc contient généralement moins de 10% en mole d'unité 1,2-cyclohexanediyle et d'unités 1,4-cyclohexanediyle pour les taux les plus élevés en éthylène dans le premier bloc et peut en contenir plus de 10% pour les taux les plus faibles en éthylène dans le premier bloc, par exemple jusqu'à 15%.

Comme la rigidité du polymère dibloc augmente avec le taux d'unités éthylène dans le premier bloc, un polymère dibloc avec un taux d'unités éthylène particulièrement élevé dans le premier bloc peut être recherché pour des applications où une forte rigidité du matériau est requise. De préférence, les unités éthylène dans le premier bloc représentent plus de 60% en mole des unités qui constituent le premier bloc, auquel cas le premier bloc contient plus de 60% en mole d'unités éthylène. De manière plus préférentielle, les unités éthylène dans le premier bloc représentent au moins 70% en mole des unités qui constituent le premier bloc, auquel cas le premier bloc contient au moins 70% en mole d'unités éthylène.

Selon un mode réalisation particulier de l'invention, les unités éthylène dans le premier bloc représentent au plus 90% en mole des unités qui constituent le premier bloc, auquel cas le premier bloc contient au plus 90% en moles d'unités éthylène.

Selon un autre mode de réalisation particulier de l'invention, les unités éthylène dans le premier bloc représentent au plus 85% en mole des unités qui constituent le premier bloc, auquel cas le premier bloc contient au plus 85% en moles d'unités éthylène.

Le premier bloc a de préférence une température de transition vitreuse comprise entre -90°C et -20°C. De manière plus préférentielle, la température de transition vitreuse du premier bloc est comprise entre -60°C et -20°C, avantageusement entre -50°C et -30°C. Le premier bloc a de préférence une masse molaire moyenne en nombre supérieure ou égale à 3 000 g/mol et inférieure ou égale à 80 000 g/mol.

Le second bloc a pour caractéristique essentielle d'être un polyéthylène de masse molaire moyenne en nombre supérieure ou égale à 2 000 g/mol et inférieure ou égale à 10 000 g/mol. Il a aussi pour autre caractéristique essentielle de présenter un point de fusion supérieure à 90°C, de préférence supérieure à 90°C et inférieure à 140°C. De préférence, le second bloc est un polyéthylène linéaire.

Le polymère dibloc peut être utilisé dans une composition, autre objet de l'invention, qui comprend en outre un autre composant. L'autre composant peut être une charge comme un noir de carbone ou une silice, un plastifiant comme une huile, un agent de réticulation comme le soufre ou un peroxyde, un agent antioxydant. L'autre composant peut être aussi un polymère, notamment un élastomère. La composition peut être une composition de caoutchouc.

Le dibloc conforme à l'invention peut être préparé selon un procédé, autre objet de l'invention, qui comprend la copolymérisation statistique d'un mélange monomère contenant de l'éthylène et un 1,3-diène, puis la polymérisation subséquente d'éthylène.

Le système catalytique utilisé dans le procédé de synthèse du polymère bloc est avantageusement un système catalytique à base au moins d'un métallocène de formule (I) et d'un organomagnésien

P(Cp¹Cp²)Nd(BH₄)_{(1+y)}Li_{y}(THF)ₓ (I)

Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0.

Dans la formule (I), l'atome de néodyme est relié à une molécule de ligand constitué des deux groupes Cp¹ et Cp² reliés entre eux par le pont P. De préférence, le symbole P, désigné sous le terme de pont, répond à la formule ZR¹R², Z représentant un atome de silicium, R¹ et R², identiques ou différents, représentant un groupe alkyle comprenant de 1 à 20 atomes de carbone. De manière plus préférentielle, le pont P est de formule SiR¹R², R¹ et R², étant identiques et tels que définis précédemment. De manière encore plus préférentielle, P répond à la formule SiMe₂.

A titre de groupes cyclopentadiényles et fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes et les fluorènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le pont P, comme cela est représenté dans le schéma ci-après.

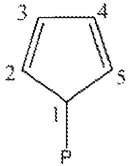

A titre de groupe cyclopentadiényle substitué en position 2 & 5, on peut citer plus particulièrement le groupe tétraméthylcyclopentadiényle.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

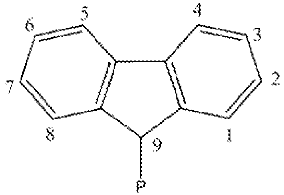

De préférence, Cp¹ et Cp² sont identiques et sont choisis dans le groupe constitué par les groupes fluorényles substitués et le groupe fluorényle. Avantageusement, dans la formule (I) Cp¹ et Cp² représentent chacun un groupe fluorényle substitué ou un groupe fluorényle, de préférence un groupe fluorényle. Le groupe fluorényle est de formule C₁₃H₈. De préférence, le métallocène est de formule (la), (Ib), (Ic), (Id) ou (le) dans lesquelles le symbole Flu présente le groupe fluorényle de formule C₁₃H₈.

[{Me₂SiFlu₂Nd(µ-BH₄)₂Li(THF)}₂] (Ia)

[Me₂SiFlu₂Nd(µ-BH₄)₂Li(THF)] (Ib)

[Me₂SiFlu₂Nd(µ-BH₄)(THF)] (Ic)

[{Me₂SiFlu₂Nd(µ-BH₄)(THF)}₂] (Id)

[Me₂SiFlu₂Nd(µ-BH₄)] (Ie)

L'organomagnésien utilisé dans le système catalytique à titre de co-catalyseur est un composé qui présente au moins une liaison C-Mg. A titre de composés organomagnésiens, on peut citer les diorganomagnésiens, en particulier les dialkylmagnésiens et les halogénures d'organomagnésien, en particulier les halogénures d'alkylmagnésien. Un diorganomagnésien est typiquement de formule MgR³R⁴ dans laquelle R³ et R⁴, identiques ou différents, représentent un groupe carboné. On entend par groupe carboné un groupe qui contient un ou plusieurs atomes de carbone. De préférence, R³ et R⁴ contiennent 2 à 10 atomes de carbone. De manière plus préférentielle, R³ et R⁴ représentent chacun un alkyle. L'organomagnésien est avantageusement un dialkylmagnésien, mieux le butyléthylmagnésium ou le butyloctylmagnésium, encore mieux le butyloctylmagnésium.

Le système catalytique peut être préparé de façon traditionnelle par un procédé analogue à celui décrit dans la demande de brevet WO 2007054224. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224. Le métallocène peut être préparé de façon traditionnelle par un procédé analogue à celui décrit dans la demande de brevet WO 2007054224, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

Le système catalytique est généralement introduit dans le réacteur contenant le solvant de polymérisation et les monomères. Pour atteindre la macrostructure souhaitée du polymère dibloc, l'homme du métier adapte les conditions de polymérisation, notamment le rapport molaire de l'organomagnésien sur le métal Nd constituant le métallocène. Le rapport molaire peut atteindre la valeur de 100, sachant qu'un rapport molaire inférieur à 10 est plus favorable pour l'obtention de polymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la polymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu, dans un réacteur avantageusement agité. Le solvant de polymérisation peut être un solvant hydrocarboné, aromatique ou aliphatique. A titre d'exemple de solvant de polymérisation, on peut citer le toluène et le méthylcyclohexane. Avantageusement, la polymérisation est conduite en solution dans un solvant hydrocarboné.

La préparation du premier bloc est réalisée par la copolymérisation du mélange contenant de l'éthylène et le 1,3-diène. La température de polymérisation varie généralement dans un domaine allant de 30 à 160°C, préférentiellement de 30 à 120°C. Pendant la préparation du premier bloc, la température du milieu réactionnel est avantageusement maintenue constante au cours de la copolymérisation et la pression totale du réacteur est aussi avantageusement maintenue constante. La préparation du premier bloc s'achève en coupant l'alimentation en monomères, notamment par une chute de la pression du réacteur, de préférence jusqu'à environ 3 bars.

La préparation du second bloc par la polymérisation subséquente de l'éthylène se poursuit par application d'une pression d'éthylène dans le réacteur, la pression en éthylène étant maintenue constante jusqu'à la consommation désirée d'éthylène pour atteindre la masse molaire moyenne en nombre souhaitée du second bloc. La température de polymérisation de l'éthylène est conduite de préférence à une température identique à celle de la préparation du premier bloc. La température de polymérisation pour la préparation du second bloc varie généralement dans un domaine allant de 30 à 160°C, préférentiellement de 30 à 120°C. La pression pour la préparation du second bloc varie généralement dans un domaine allant de 1 bar à 150 bars et préférentiellement de 1 bar à 10 bars. La synthèse du second bloc s'achève quand le second bloc atteint la masse molaire moyenne en nombre souhaitée.

La polymérisation peut être stoppée par refroidissement du milieu de polymérisation ou par ajout d'un alcool, préférentiellement un alcool contenant 1 à 3 atomes de carbone, par exemple l'éthanol. Le polymère dibloc peut être récupéré selon les techniques classiques connues de l'homme du métier comme par exemple par précipitation, par évaporation du solvant sous pression réduite ou par stripping à la vapeur d'eau.

Le polymère dibloc conforme à l'invention qui peut être préparé selon le procédé conforme à l'invention présente une rhéologie améliorée par rapport au copolymère statistique de même microstructure et de même macrostructure que le premier bloc du polymère dibloc. L'amélioration de la rhéologie se manifeste par une forte augmentation de la viscosité du polymère aux faibles taux de cisaillement (typiquement inférieurs à 10 rad/s), tout en ayant un faible impact sur la viscosité aux taux élevés de cisaillement (typiquement supérieurs à 50 rad/s). L'amélioration de la rhéologie permet de maîtriser davantage l'écoulement du polymère au cours des opérations qui sollicitent le polymère à faible taux de cisaillement comme l'extrusion à chaud. Ce résultat est d'autant plus surprenant qu'il est obtenu sans modification de la macrostructure du polymère, ni de la propriété thermique qu'est la température de transition vitreuse. En effet, le dibloc reste une chaîne linéaire comme le copolymère statistique de même microstructure que le premier bloc et il conserve la valeur de température de transition vitreuse de ce même copolymère statistique.

En résumé, l'invention est mise en œuvre avantageusement selon l'un quelconque des modes de réalisation suivants 1 à 33 :
Mode 1 : Polymère dibloc composé d'un premier bloc et d'un second bloc, le premier bloc étant un copolymère statistique comprenant des unités d'un 1,3-diène et plus de 50% en mole d'unités éthylène, le second bloc étant un polyéthylène de température de fusion supérieure à 90°C et de masse molaire moyenne en nombre supérieure ou égale à 2 000 g/mol et inférieure ou égale à 10 000 g/mol.
Mode 2 : Polymère dibloc selon le mode 1 dans lequel le premier bloc est un copolymère statistique d'éthylène et d'un 1,3-diène.
Mode 3 : Polymère dibloc selon l'un quelconque des modes 1 à 2 dans lequel le premier bloc contient plus de 60% en mole d'unités éthylène.
Mode 4 : Polymère dibloc selon l'un quelconque des modes 1 à 3 dans lequel le premier bloc contient au moins 70% en mole d'unités éthylène.
Mode 5 : Polymère dibloc selon l'un quelconque des modes 1 à 4 dans lequel le premier bloc contient au plus 90% en mole d'unités éthylène.
Mode 6 : Polymère dibloc selon l'un quelconque des modes 1 à 5 dans lequel le premier bloc contient au plus 85% en mole d'unités éthylène.
Mode 7 : Polymère dibloc selon l'un quelconque des modes 1 à 6 dans lequel le premier bloc a une température de transition vitreuse comprise entre -90°C et -20°C.
Mode 8 : Polymère dibloc selon l'un quelconque des modes 1 à 7 dans lequel la température de transition vitreuse du premier bloc est comprise entre -60°C et -20°C.
Mode 9 : Polymère dibloc selon l'un quelconque des modes 1 à 8 dans lequel la température de transition vitreuse du premier bloc est comprise entre -50°C et -30°C.
Mode 10 : Polymère dibloc selon l'un quelconque des modes 1 à 9 dans lequel le premier bloc a une masse molaire moyenne en nombre supérieure ou égale à 3 000 g/mol et inférieure ou égale à 80 000 g/mol.
Mode 11 : Polymère dibloc selon l'un quelconque des modes 1 à 10 dans lequel le 1,3-diène est le 1,3-butadiène ou l'isoprène.
Mode 12 : Polymère dibloc selon l'un quelconque des modes 1 à 11 dans lequel le 1,3-diène est le 1,3-butadiène.
Mode 13 : Polymère dibloc selon l'un quelconque des modes 1 à 12 dans lequel le 1,3-diène est le 1,3-butadiène ou un mélange de 1,3-diènes dont un est le 1,3-butadiène et que le premier bloc contient des unités 1,2-cyclohexanediyle ou des unités 1,4-cyclohexanediyle.
Mode 14 : Polymère dibloc selon l'un quelconque des modes 1 à 13 dans lequel le 1,3-diène est le 1,3-butadiène ou un mélange de 1,3-diènes dont un est le 1,3-butadiène et que le premier bloc contient des unités 1,2-cyclohexanediyle.
Mode 15 : Polymère dibloc selon l'un quelconque des modes 1 à 14 dans lequel les unités du 1,3-diène sous la configuration 1,2 et les unités du 1,3-diène sous la configuration 3,4 représentent plus de 50% en mole des unités du 1,3-diène.
Mode 16 : Polymère dibloc selon l'un quelconque des modes 1 à 15 dans lequel le premier bloc contient des unités du 1,3-diène de configuration 1,4.
Mode 17 : Polymère dibloc selon l'un quelconque des modes 1 à 16 dans lequel le premier bloc contient des unités du 1,3-diène de configuration 1,4-trans.
Mode 18 : Polymère dibloc selon le mode 17 dans lequel les unités du 1,3-diène de configuration 1,4-trans représentent plus de 50% en mole des unités du 1,3-diène de configuration 1,4.
Mode 19 : Polymère dibloc selon le mode 17 ou 18 dans lequel les unités du 1,3-diène de configuration 1,4-trans représentent 100% en mole des unités du 1,3-diène de configuration 1,4.
Mode 20 : Polymère dibloc selon l'un quelconque des modes 1 à 19 dans lequel le second bloc est un polyéthylène linéaire.
Mode 21 : Polymère dibloc selon l'un quelconque des modes 1 à 20 dans lequel le point de fusion du second bloc est supérieur à 90°C et inférieur à 140°C.
Mode 22 : Composition qui comprend un polymère dibloc selon l'un quelconque des modes 1 à 21 et un autre composant.
Mode 23 : Procédé de préparation d'un polymère dibloc selon l'un quelconque des modes 1 à 22 qui comprend la copolymérisation statistique d'un mélange monomère contenant de l'éthylène et un 1,3-diène, puis la polymérisation subséquente d'éthylène.
Mode 24 : Procédé selon le mode 23 dans lequel un système catalytique à base au moins d'un métallocène de formule (I) et d'un organomagnésien est utilisé

   P(Cp¹Cp²)Nd(BH₄)_{(1+y)}-Li_{y}(THF)ₓ (I)

   Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle,
   y, nombre entier, étant égal ou supérieur à 0,
   x, nombre entier ou non, étant égal ou supérieur à 0.
Mode 25 : Procédé selon le mode 24 dans lequel le symbole P répond à la formule ZR¹R², Z représentant un atome de silicium, R¹ et R², identiques ou différents, représentant un groupe alkyle comprenant de 1 à 20 atomes de carbone.
Mode 26 : Procédé selon le mode 24 ou 25 dans lequel le symbole P est de formule SiR¹R², R¹ et R², identiques, représentant un groupe alkyle comprenant de 1 à 20 atomes de carbone.
Mode 27 : Procédé selon l'un quelconque des modes 24 à 26 dans lequel le symbole P répond à la formule SiMe₂.
Mode 28 : Procédé selon l'un quelconque des modes 24 à 27 dans lequel Cp¹ et Cp² sont identiques et sont choisis dans le groupe constitué par les groupes fluorényles substitués et le groupe fluorényle.
Mode 29 : Procédé selon l'un quelconque des modes 24 à 28 dans lequel Cp¹ et Cp² sont chacun un groupe fluorényle.
Mode 30 : Procédé selon l'un quelconque des modes 24 à 29 dans lequel le métallocène est de formule (la), (Ib), (Ic), (Id) ou (le) dans lesquelles le symbole Flu présente le groupe fluorényle de formule C₁₃H₈.

   [{Me₂SiFlu₂Nd(µ-BH₄)₂Li(THF)]₂] (la)

   [Me₂SiFlu₂Nd(µ-BH₄)₂Li(THF)] (Ib)

   [Me₂SiFlu₂Nd(µ-BH₄)(THF)] (Ic)

   [{Me₂SiFlu₂Nd(µ-BH₄)(THF)}₂] (Id)

   [Me₂SiFlu₂Nd(µ-BH₄)] (le)
Mode 31 : Procédé selon l'un quelconque des modes 24 à 30 dans lequel l'organomagnésien est un diorganomagnésien ou un halogénure d'organomagnésien.
Mode 32 : Procédé selon l'un quelconque des modes 24 à 31 dans lequel l'organomagnésien est un dialkylmagnésien, de préférence le butyléthylmagnésium ou le butyloctylmagnésium.
Mode 33 : Procédé selon l'un quelconque des modes 24 à 32 dans lequel l'organomagnésien est le butyloctylmagnésium.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples :

### 1 Chromatographie d'exclusion stérique (SEC) :

Les analyses de Chromatographie d'exclusion stérique à haute température (HT-SEC) ont été réalisées en utilisant un appareil Viscotek (de Malvern Instruments) équipé de 3 colonnes (PLgel Olexis 300 mm x 7,5 mm (PL1110-6400) de Agilent Technologies de Agilent Technologies) et de 3 détecteurs (réfractomètre, viscosimètre et diffusion de la lumière) pour déterminer les masses molaires moyennes en poids (*M*_{w}), les masses molaires moyennes en nombre (*M*ₙ) et la dispersité (*Ð* = Mw/Mn).

200 µL d'une solution de l'échantillon dans le 1,2,4-trichlorobenzène à une concentration de 3 mg/mL ont été élués dans le 1,2,4-trichlorobenzène en utilisant un débit de 1 mL/min à 150 °C. La phase mobile a été stabilisée par du 2,6-di(tert-butyl)-4-methylphénol (400 mg/L). La solution de l'échantillon est chauffée à 150°C et l'injection est faite à chaud (150°C).

Le logiciel OmniSEC a été utilisé pour l'acquisition et l'analyse des données. Les masses molaires des copolymères d'éthylène et de 1,3-butadiène synthétisés sont calculées en utilisant une courbe de calibration universelle étalonnée partir de polystyrènes standards (*M*ₚ : 672 à 12 000 000 g/mol) de Polymer Standard Service (Mainz) en utilisant les détecteurs réfractomètre et viscosimètre.

### 2 Résonance magnétique nucléaire (RMN) :

La spectroscopie RMN haute résolution des polymères a été effectuée sur un spectromètre Bruker 400 Avance III opérant à 400 MHz équipé d'une sonde BBFO 5 mm pour le proton et sur un spectromètre Bruker 400 Avance II opérant à 400 MHz équipé d'une sonde PSEX ¹³C 10 mm pour le carbone. Les acquisitions sont faites à 363 K. Un mélange de tétrachloroéthylène (TCE) et benzène deutéré (C₆D₆) (2/1 v/v) a été utilisé comme solvant. Les échantillons ont été analysés à une concentration de 1 % en masse pour les analyses en RMN du proton (RMN ¹H) et 5 % en masse pour les analyses en RMN du carbone (RMN ¹³C). Les déplacements chimiques sont donnés en ppm, relativement au signal proton du benzène fixé à 7,16 ppm et au signal du carbone du TCE fixé à 120,65 ppm. La séquence d'acquisition utilisée pour l'analyse RMN ¹³C d'un polymère est : « Power gate decoupling » (spectre découplé proton avec NOE) avec un angle d'impulsion de 70°, TD = 64 K et un délai entre les impulsions de 4,5 s. Le nombre d'acquisitions est fixé à 5120.

La spectroscopie RMN haute résolution des composés organométalliques et de leurs précurseurs a été effectuée sur un spectromètre Bruker 400 Avance III opérant à 400 MHz équipé d'une sonde BBFO 5 mm ou sur un spectromètre Bruker 500 Avance III opérant à 500 MHz équipé d'une sonde BBFO 5 mm. Les acquisitions sont faites à 298 K ou 340 K dans du benzène deutéré (C₆D₆). Les échantillons ont été analysés à une concentration de 5 % en masse. Les déplacements chimiques sont donnés en ppm, relativement au signal du benzène fixé à 7,16 ppm et au signal du carbone fixé à 128,06 ppm. Pour les analyses 2D les séquences suivantes ont été utilisées : **COSY :** Pulse program ; cosygpqf « cosy avec gradients » ; SW : 11 ppm x 11 ppm ; d1 : 2 s ; Impulsion 90 ° « hard » P1 = 13 µs et 16 W ; Gradient : SMSQ10.100. **HSQC** : Pulse program ; hsqcetgpsi2 « HSQC avec gradients » ; SW : 11 ppm (¹H) x 220 ppm (¹³C) ; d1 : 2 s ; Impulsion 90 ° « hard » ¹H P1 = 13 µs et 16 W et ¹³C P2 = 26 µs et 84 W ; Gradient : SMSQ10.100. **HMQC** : Pulse program ; hmqcetgp « HMQC avec gradients » ; SW : 11 ppm (¹H) x 220 ppm (¹³C) ; d1 : 1,47 s ; Impulsion 90 ° « hard » ¹H P1 = 13 µs et 16 W et ¹³C P2 = 26 µs et 84 W ; Gradient : SMSQ10.100. **HMBC** : Pulse program ; hmbcqgndqf « HMBC avec gradients optimisés pour couplage longue distance et avec low-pass J-filter pour annuler les corrélations à une liaison » ; SW : 13,3 ppm (¹H) x 220 ppm (¹³C) ; d1 : 1,5 s ; Impulsion 90 ° « hard » ¹H P1 = 13 µs et 16 W et ¹³C P2 = 26 µs et 84 W ; Gradient : SMSQ10.100. **NOESY** : Pulse program ; noesygpphpp « NOESY avec gradients » ; SW : 9.6 ppm (¹H) ; d1 : 1,98 s ; Impulsion 90 ° « hard » P1 = 13 µs et 16 W ; Gradient : SMSQ10.100.

### 3 Calorimétrie différentielle à balayage (DSC) :

Les analyses sont effectuées sur un appareil DSC 3⁺ de chez Mettler Toledo calibré à l'aide d'indium et d'eau. Cet appareil dispose d'une plage de température allant de -90 à 700 °C. Un ordinateur pilote l'appareil One Click et STARe de chez Mettler Toledo. Les échantillons ont été analysés suivant une méthode dynamique comportant 9 paliers de températures : • Palier 1 : 20 à 180 °C (10 °C/min), • Palier 2 : isotherme 180 °C (5 min), • Palier 3 : 180 à -80 °C (-10 °C/min), • Palier 4 : isotherme -80 °C (5 min), • Palier 5 : -80 à 180 °C (10 °C/min), • Palier 6 : isotherme 180 °C (5 min), • Palier 7 : 180 à -80 °C (-10 °C/min), • Palier 8 : isotherme -80 °C (5 min), • Palier 9 : -80 à 180 °C (10 °C/min). Les deux premières montées permettent d'effacer le passé thermique de l'échantillon. Les mesures de la température de transition vitreuse (Tg) et de fusion (Tf) se font sur le 9^{ème} palier. Le 7^{ème} palier est également conservé pour obtenir des informations sur la cristallisation de l'échantillon.

Les valeurs de Tg et de Tf sont déterminées en appliquant le retraitement de données du logiciel STARe de chez Mettler Toledo. Le taux de cristallinité est déterminé en utilisant la norme ISO 11357-3 :2011 pour mesurer la température et l'enthalpie de fusion et de cristallisation des polymères utilisés par analyse calorimétrique différentielle (DSC). L'enthalpie de référence du polyéthylène est de 293 J/g (source : B. Wunderlich, Thermal analysis, Academic Press, 1990, 281).

### 4 Propriétés rhéologiques :

Les analyses sont effectuées sur un appareil rhéomètre rotationnel MARS 60 (Thermo Scientific) équipé d'un ensemble plan inférieur / four supérieur Peltier avec une gamme de températures accessibles entre -20 et 200 °C, ainsi que de géométries plan-plan 8 mm. Les échantillons sont mis en place à 150 °C. Les échantillons sont pressés sous forme de disques à 150 °C (épaisseur 1 à 1,5 mm) pendant 5 min, puis découpés avec un emporte-pièce sous forme de disques de diamètre 8 mm. La grandeur mesurée est le module élastique (ou module de conservation), noté G' de façon conventionnelle. Les résultats sont présentés en base 100 pour chaque taux de cisaillement, la valeur de 100 étant attribuée au polymère de référence.

### Exemple 1 non conforme : (polymère de référence)

200 mL de toluène (Biosolve) purifié sur un système SPS800 MBraun sont introduits dans un ballon inerté de 250 mL équipé d'une olive aimantée. 0,28 mL (0,25 mmol) d'une solution de BOMAG (0,88 mol/L) sont introduits dans le ballon sous agitation. 16 mg (12,5 µmol) de Me₂Si(C₁₃H₈)₂Nd(BH₄)₂Li.THF sont ensuite introduits dans le ballon.

La solution catalytique est canulée dans un réacteur de 250 mL sous atmosphère inerte à 70 °C. La surpression d'argon dans le réacteur est réduite à 0,5 bar puis le réacteur est pressurisé à 4 bars avec un mélange éthylène / butadiène de ratio 80 / 20 molaire sous une agitation à 1000 tr/min. La pression est maintenue constante dans le réacteur à l'aide d'un réservoir contenant le mélange éthylène / butadiène.

Après une chute de pression dans le réservoir équivalente à 13 g de monomères, l'alimentation est arrêtée et le réacteur est isolé. Lorsque la pression dans le réacteur atteint 2,8 bars, le réacteur est dégazé et la température est ramenée à 20 °C. La solution de polymère est précipitée dans du méthanol sous agitation en présence d'environ 20 mg de 2,2'-Méthylènebis(6-tert-butyl-4-méthylphénol) comme antioxydant. Le polymère obtenu est séché sous vide à 70 °C pendant 4 h. On récupère 15 g de polymère soit un rendement de 100%.

### Exemple 2 conforme : (polymère selon l'invention)

200 mL de toluène (Biosolve) purifié sur un système SPS800 MBraun sont introduits dans un ballon inerté de 250 mL équipé d'une olive aimantée. 0,28 mL (0,25 mmol) d'une solution de BOMAG (0,88 mol/L) sont introduits dans le ballon sous agitation. 16 mg (12,5 µmol) de Me₂Si(C₁₃H₈)₂Nd(BH₄)₂Li.THF sont ensuite introduits dans le ballon.

La solution catalytique est canulée dans un réacteur de 250 mL sous atmosphère inerte à 70 °C. La surpression d'argon dans le réacteur est réduite à 0,5 bar puis le réacteur est pressurisé à 4 bars avec un mélange éthylène / butadiène de ratio 80 / 20 molaire sous une agitation à 1000 tr/min. La pression est maintenue constante dans le réacteur à l'aide d'un réservoir contenant le mélange éthylène / butadiène.

Après une chute de pression dans le réservoir équivalente à 13 g de monomères, l'alimentation est arrêtée et le réacteur est isolé. Lorsque la pression dans le réacteur atteint 2,8 bars, le réacteur est de nouveau pressurisé à 4 bars à l'aide d'un réservoir contenant de l'éthylène uniquement.

Après une chute de pression dans le réservoir équivalente à la quantité d'éthylène consommé désirée (4 g), le réacteur est dégazé et la température est ramenée à 20 °C. La solution de polymère est précipitée dans du méthanol sous agitation en présence d'environ 20 mg de 2,2'-Méthylènebis(6-tert-butyl-4-méthylphénol) comme antioxydant. Le polymère obtenu est séché sous vide à 70 °C pendant 4 h. On récupère 19 g de polymère, soit un rendement de 100%.

Les caractéristiques des polymères figurent dans le tableau 1.

Le taux d'unité éthylène, le taux d'unité de 1,3 butadiène sous la configuration 1,2 (unité 1,2), sous la configuration 1,4 (unité 1,4) et le taux d'unité 1,2-cyclohexanediyle (unité cycle) sont exprimés en pourcentage molaire par rapport à l'ensemble des unités du polymère.

**Tableau 1 :**

| Ex. | unité éthylène | unité 1,2 | unité 1,4 | unité cycle | Tg (°C) | Tf (°C) | taux (%) cristallinité | *M*ₙ (g/mol) | *Ð* |
|---|---|---|---|---|---|---|---|---|---|
| 1 | 76.1 | 9.1 | 5.7 | 9.1 | -37 | - | - | 29000 | 1.8 |
| 2 | 83.6 | 6.0 | 3.8 | 6.6 | -36 | 124 | 12 | 32300 | 2.9 |

Les propriétés rhéologiques figurent dans le tableau 2.

**Tableau 2 :**

| Ex. | G' à 0,1 Hz, à 150°C | G' à 1 Hz, à 150°C | G' à 10 Hz, à 150°C |
|---|---|---|---|
| 1 | 100 | 100 | 100 |
| 2 | 4300 | 500 | 200 |

La comparaison des exemples 1 et 2 montrent que la valeur de G' du dibloc mesurée à des faibles taux de cisaillement, typiquement inférieurs à 10 rad/s, est très fortement amplifiée par rapport au polymère de référence. En effet, à 0.1 Hz (soit 0.6 rad/s) elle est 43 fois supérieure à celle du G' du polymère de référence. Même à 1 Hz (soit 6 rad/s), le facteur multiplicatif est de 5. Pour les taux de cisaillement élevés, typiquement supérieurs à 50 rad/s, le facteur multiplicatif est bien moindre, par exemple égal à 2 à 10 Hz (soit 62 rad/s).

L'utilisation d'un polymère dibloc selon l'invention en remplacement d'un polymère statistique permet bien une forte augmentation de la viscosité du polymère aux faibles taux de cisaillement, alors que l'impact sur la viscosité est relativement faible aux taux élevés de cisaillement. Cette augmentation de viscosité aux faibles taux de cisaillement permet de limiter les phénomènes d'écoulement du polymère dans les procédés de transformation du polymère aux faibles taux de cisaillement sans modification notable de ses propriétés rhéologiques aux forts taux de cisaillement.

## Revendications

1. Polymère dibloc composé d'un premier bloc et d'un second bloc, le premier bloc étant un copolymère statistique comprenant des unités d'un 1,3-diène et plus de 50% en mole d'unités éthylène, le second bloc étant un polyéthylène de température de fusion supérieure à 90°C et de masse molaire moyenne en nombre supérieure ou égale à 2 000 g/mol et inférieure ou égale à 10 000 g/mol.

2. Polymère dibloc selon la revendication 1 dans lequel le premier bloc est un copolymère statistique d'éthylène et d'un 1,3-diène.

3. Polymère dibloc selon l'une quelconque des revendications 1 à 2 dans lequel le premier bloc contient plus de 60% en mole d'unités éthylène, de préférence au moins 70% en mole d'unités éthylène.

4. Polymère dibloc selon l'une quelconque des revendications 1 à 3 dans lequel le premier bloc contient au plus 90% en mole d'unités éthylène.

5. Polymère dibloc selon l'une quelconque des revendications 1 à 4 dans lequel le premier bloc contient au plus 85% en mole d'unités éthylène.

6. Polymère dibloc selon l'une quelconque des revendications 1 à 5 dans lequel le premier bloc a une température de transition vitreuse comprise entre -90°C et -20°C.

7. Polymère dibloc selon l'une quelconque des revendications 1 à 6 dans lequel le premier bloc a une masse molaire moyenne en nombre supérieure ou égale à 3 000 g/mol et inférieure ou égale à 80 000 g/mol.

8. Polymère dibloc selon l'une quelconque des revendications 1 à 7 dans lequel le 1,3-diène est le 1,3-butadiène ou l'isoprène, de préférence le 1,3-butadiène.

9. Polymère dibloc selon l'une quelconque des revendications 1 à 8 dans lequel le 1,3-diène est le 1,3-butadiène ou un mélange de 1,3-diènes dont un est le 1,3-butadiène et que le premier bloc contient des unités 1,2-cyclohexanediyle ou des unités 1,4-cyclohexanediyle, de préférence des unités 1,2-cyclohexanediyle.

10. Polymère dibloc selon l'une quelconque des revendications 1 à 9 dans lequel les unités du 1,3-diène sous la configuration 1,2 et les unités du 1,3-diène sous la configuration 3,4 représentent plus de 50% en mole des unités du 1,3-diène.

11. Polymère dibloc selon l'une quelconque des revendications 1 à 10 dans lequel le premier bloc contient des unités du 1,3-diène de configuration 1,4, de préférence 1,4-trans.

12. Polymère dibloc selon l'une quelconque des revendications 1 à 11 dans lequel le second bloc est un polyéthylène linéaire.

13. Composition qui comprend un polymère dibloc selon l'une quelconque des revendications 1 à 12 et un autre composant.

14. Procédé de préparation d'un polymère dibloc selon l'une quelconque des revendications 1 à 12 qui comprend la copolymérisation statistique d'un mélange monomère contenant de l'éthylène et un 1,3-diène, puis la polymérisation subséquente d'éthylène.

15. Procédé selon la revendication 14 dans lequel un système catalytique à base au moins d'un métallocène de formule (I) et d'un organomagnésien est utilisé
P(Cp¹Cp²)Nd(BH₄)_{(1+γ)}-Li_{y}(THF)ₓ (I)
Cp¹ et Cp², identiques ou différents, étant choisis dans le groupe constitué par les groupes cyclopentadiényles et les groupes fluorényles, les groupes pouvant être substitués ou non,
P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0.

## Patentansprüche

1. Diblockpolymer, bestehend aus einem ersten Block und einem zweiten Block, wobei es sich bei dem ersten Block um ein statistisches Polymer handelt, das Einheiten eines 1,3-Diens und mehr als 50 Mol-% Ethyleneinheiten umfasst, wobei es sich bei dem zweiten Block um ein Polyethylen mit einem Schmelzpunkt von mehr als 90 °C und einer zahlenmittleren Molmasse größer oder gleich 2000 g/mol und kleiner oder gleich 10.000 g/mol handelt.

2. Diblockpolymer nach Anspruch 1, wobei es sich bei dem ersten Block um ein statistisches Copolymer von Ethylen und einem 1,3-Dien handelt.

3. Diblockcopolymer nach einem der Ansprüche 1 bis 2, wobei der erste Block mehr als 60 Mol-% Ethyleneinheiten, vorzugsweise mindestens 70 Mol-% Ethyleneinheiten, enthält.

4. Diblockpolymer nach einem der Ansprüche 1 bis 3, wobei der erste Block höchstens 90 Mol-% Ethyleneinheiten enthält.

5. Diblockpolymer nach einem der Ansprüche 1 bis 4, wobei der erste Block höchstens 85 Mol-% Ethyleneinheiten enthält.

6. Diblockpolymer nach einem der Ansprüche 1 bis 5, wobei der erste Block eine Glasübergangstemperatur zwischen -90 °C und -20 °C aufweist.

7. Diblockpolymer nach einem der Ansprüche 1 bis 6, wobei der erste Block eine zahlenmittlere Molmasse größer oder gleich 3000 g/mol und kleiner oder gleich 80.000 g/mol aufweist.

8. Diblockpolymer nach einem der Ansprüche 1 bis 7, wobei es sich bei dem 1,3-Dien um 1,3-Butadien oder Isopren, vorzugsweise 1,3-Butadien, handelt.

9. Diblockpolymer nach einem der Ansprüche 1 bis 8, wobei es sich bei dem 1,3-Dien um 1,3-Butadien oder eine Mischung von 1,3-Dienen, von denen eines 1,3-Butadien ist, handelt und der erste Block 1,2-Cyclohexandiyleinheiten oder 1,4-Cyclohexandiyleinheiten, vorzugsweise 1,2-Cyclohexandiyleinheiten, enthält.

10. Diblockpolymer nach einem der Ansprüche 1 bis 9, wobei die Einheiten des 1,3-Diens in der 1,2-Konfiguration und die Einheiten des 1,3-Diens in der 3,4-Konfiguration mehr als 50 Mol-% der Einheiten des 1,3-Diens ausmachen.

11. Diblockpolymer nach einem der Ansprüche 1 bis 10, wobei der erste Block Einheiten des 1,3-Diens in 1,4-Konfiguration, vorzugsweise trans-1,4-Konfiguration, enthält.

12. Diblockpolymer nach einem der Ansprüche 1 bis 11, wobei es sich bei dem zweiten Block um ein lineares Polyethylen handelt.

13. Zusammensetzung, die ein Diblockpolymer nach einem der Ansprüche 1 bis 12 und eine andere Komponente umfasst.

14. Verfahren zur Herstellung eines Diblockpolymers nach einem der Ansprüche 1 bis 12, das die statistische Copolymerisation einer Monomerenmischung, die Ethylen und ein 1,3-Dien enthält, und dann die anschließende Polymerisation von Ethylen umfasst.

15. Verfahren nach Anspruch 14, bei dem ein katalytisches System auf Basis von mindestens einem Metallocen der Formel (I) und einer Organomagnesiumverbindung verwendet wird,
P(Cp¹Cp²)Nd(BH₄)_{(1+γ)}-Li_{y}(THF)_{X} (I)
wobei Cp¹ und Cp² gleich oder verschieden sind und aus der Gruppe bestehend aus Cyclopentadienylgruppen und Fluorenylgruppen ausgewählt sind, wobei die Gruppen substituiert oder unsubstituiert sein können,
wobei P eine die beiden Gruppen Cp¹ und Cp² verbrückende Gruppe ist und für eine Gruppe ZR¹R² steht, wobei Z für ein Silicium- oder Kohlenstoffatom steht und R¹ und R² gleich oder verschieden sind und jeweils für eine Alkylgruppe mit 1 bis 20 Kohlenstoffatomen, vorzugsweise ein Methyl, stehen,
wobei y ganzzahlig ist und gleich oder größer als 0 ist, wobei x ganzzahlig oder nicht ganzzahlig ist und gleich oder größer als 0 ist.

## Claims

1. Diblock polymer composed of a first block and a second block, the first block being a statistical copolymer comprising units of a 1,3-diene and more than 50 mol% of ethylene units, the second block being a polyethylene with a melting point above 90°C and a number-average molar mass greater than or equal to 2000 g/mol and less than or equal to 10 000 g/mol.

2. Diblock polymer according to Claim 1, wherein the first block is a statistical copolymer of ethylene and a 1,3-diene.

3. Diblock polymer according to either one of Claims 1 and 2, wherein the first block contains more than 60 mol% of ethylene units, preferably at least 70 mol% of ethylene units.

4. Diblock polymer according to any one of Claims 1 to 3, wherein the first block contains at most 90 mol% of ethylene units.

5. Diblock polymer according to any one of Claims 1 to 4, wherein the first block contains at most 85 mol% of ethylene units.

6. Diblock polymer according to any one of Claims 1 to 5, wherein the first block has a glass transition temperature between -90°C and -20°C.

7. Diblock polymer according to any one of Claims 1 to 6, wherein the first block has a number-average molar mass of greater than or equal to 3000 g/mol and less than or equal to 80 000 g/mol.

8. Diblock polymer according to any one of Claims 1 to 7 in which the 1,3-diene is 1,3-butadiene or isoprene, preferably 1,3-butadiene.

9. Diblock polymer according to any one of Claims 1 to 8, wherein the 1,3-diene is 1,3-butadiene or a mixture of 1,3-dienes, one of which is 1,3-butadiene, and the first block contains 1,2-cyclohexanediyl units or 1,4-cyclohexanediyl units, preferably 1,2-cyclohexanediyl units.

10. Diblock polymer according to any one of Claims 1 to 9, wherein the units of the 1,3-diene in the 1,2 configuration and the units of the 1,3-diene in the 3,4 configuration represent more than 50 mol% of the units of the 1,3-diene.

11. Diblock polymer according to any one of Claims 1 to 10, wherein the first block contains units of the 1,3-diene of 1,4 configuration, preferably trans-1,4 configuration.

12. Diblock polymer according to any one of Claims 1 to 11, wherein the second block is a linear polyethylene.

13. Composition which comprises a diblock polymer according to any one of Claims 1 to 12 and another component.

14. Process for preparing a diblock polymer according to any one of Claims 1 to 12 which comprises the statistical copolymerization of a monomer mixture containing ethylene and a 1,3-diene, then the subsequent polymerization of ethylene.

15. Process according to Claim 14, wherein a catalytic system based at least on a metallocene of formula (I) and an organomagnesium compound is used
P(Cp¹Cp²)Nd(BH₄)_{(1+y)}-Li_{y}(THF)ₓ (I)
Cp¹ and Cp², which are identical or different, being selected from the group consisting of cyclopentadienyl groups and fluorenyl groups, the groups being substituted or unsubstituted,
P being a group bridging the two Cp¹ and Cp² groups and representing a ZR¹R² group, Z representing a silicon or carbon atom, R¹ and R², which are identical or different, each representing an alkyl group comprising from 1 to 20 carbon atoms, preferably a methyl, y, which is an integer, being equal to or greater than 0,
x, which is or is not an integer, being equal to or greater than 0.
